# EUROPÄISCHE PATENTSCHRIFT

(11) **EP 2 149 410 B1**
(45) Veröffentlichungstag und Bekanntmachung des Hinweises auf die Patenterteilung: **15.06.2011**
(21) Anmeldenummer: 09009486.3
(22) Anmeldetag: 22.07.2009
(51) Int. Cl.: B21F 27/10, B21F 27/12, B23K 11/00

(54) **Verfahren zur maschinellen Herstellung einer Bewehrungsmatte und Schweisseinrichtung**
Method for mechanical production of a reinforcing mat and welding device
Procédé de fabrication mécanique d'un treillis d'armature et dispositif de soudage

(30) Priorität: 30.07.2008 AT 11782008
(43) Veröffentlichungstag der Anmeldung: 03.02.2010
(73) Patentinhaber: Progress Maschinen & Automation AG, 39042 Brixen (IT)
(72) Erfinder: Nussbaumer, Erich, 39010 Nals (IT); Enderes, Karl Friedrich, 39042 Brixen (IT)
(74) Vertreter: Hofinger, Stephan

(56) Entgegenhaltungen:
- WO-A1-03/047788
- DE-C1- 3 327 243
- JP-A- 58 097 452
- BOWMAN D A: "MESH WELDING AT HIGH RATES AND TO NON-STANDARD PATTERNS" WELDING AND METAL FABRICATION, IPC LTD. HAYWARDS HEATH, GB, 1. März 1981 (1981-03-01), Seiten 77-79, XP000575230 ISSN: 0043-2245
- "WELDING OF ANGLED WIRE MESH PANELS" WIRE INDUSTRY, MAGNUM PUBLICATIONS LTD. OXTED, GB, Bd. 63, Nr. 6, 1. Juni 1996 (1996-06-01), Seite 420, XP000591646 ISSN: 0043-6011

## Beschreibung

Die Erfindung betrifft ein Verfahren zur maschinellen Herstellung einer Bewehrungsmatte, bei dem mehrere im Wesentlichen parallele, voneinander beabstandete Querstäbe mit mehreren voneinander beabstandeten Längsstäben rasterförmig ausgerichtet und miteinander verschweißt werden, wobei in einem Schweißtakt mehrere, insbesondere alle, Längsstäbe mit dem selben Querstab verschweißt werden. Die Erfindung betrifft auch eine Schweißeinrichtung zur Durchführung des Verfahrens.

Bisher war es üblich, die Quer- und Längsstäbe einmalig rasterförmig auszurichten, in dieser ausgerichteten Position zu fixieren, was beispielsweise mittels geeigneter Führungseinrichtungen erfolgte, und miteinander zu verschweißen. Diese Verfahren eignen sich zwar zur Herstellung gleichmäßig gerasteter Bewehrungsmatten, bei denen die Längs- und Querstäbe rechiwinkelig zueinander angeordnet sind. Sonderformen sind mit derartigen Verfahren aber kaum realisierbar.

Die WO 03/047788 A1 zeigt ein Verfahren zur maschinellen Herstellung einer Bewehrungsmatte, bei der mehrere im Wesentlichen parallele, voneinander beabstandete Querstäbe mit mehreren voneinander beabstandeten Längsstäben rasterförmig ausgerichtet und miteinander verschweißt werden, wobei in einem Schweißtakt mehrere, insbesondere alle, Längsstäbe mit demselben Querstab verschweißt werden.

Eine Aufgabe der Erfindung ist es, ein neuartiges Verfahren der eingangs erwähnten Art dahin gehend zu verbessern, dass auch die Herstellung von Bewehrungsmatten mit unregelmäßigem Raster bzw. rasterlosen Bewehrungsmatten erlaubt.

Die Erfindung löst diese Aufgabe, indem die Längsstäbe vor jedem Schweißtakt in Bezug auf den jeweiligen Querstab lagejustiert werden, wobei zur Anpassung an die vielfältigen unterschiedlichen statischen Anforderungen, die an die herzustellenden Bewehrungsmatten gerichtet sind, gemäß einem bevorzugten Ausführungsbeispiel der Erfindung vorgesehen sein kann, dass die Längsstäbe in Bezug auf die Querstäbe mit unterschiedlichen Abständen zueinander lagejustiert werden.

Es wird also im Vergleich zu den bisher bekannten Verfahren ein zusätzlicher Verfahrensschritt, nämlich der des Positionierens der Längsstäbe vor dem Schweißtakt angeführt.

Gemäß einer weiteren Ausführungsform des erfindungsgemäßen Verfahrens werden dabei die Längsstäbe vor dem ersten Schweißtakft mittels einer Transporteinrichtung einer Schweißeinrichtung zugeführt, bevor sie mittels einer Positioniervorrichtung in Bezug auf den ersten Querstab, mit dem sie verschweißt werden, lagejustiert und verschweißt werden, wobei es sich für eine besonders einfache und effiziente Ausrichtung der Quer- und Längsstäbe zueinander als günstig herausgestellt hat, wenn die Längsstäbe zwischen den einzelnen Schweißtakten frei bewegbar gelagert sind.

Als Schweißtakt wird dabei jener Arbeitsvorgang verstanden, bei dem die Längsstäbe mit ein und demselben Querstab verschweißt werden. Dieser Schweißvorgang kann beispielsweise von einem verfahrbaren Schweißkopf der nacheinander den ersten Längsstab, den zweiten Längsstab, den dritten Längsstab usw. mit dem einen Querstab verschweißt oder von mehreren Schweißköpfen, die gleichzeitig den ersten, den zweiten, den dritten usw. Längsstab mit dem einen Querstab verschweißen, durchgeführt werden.

Dadurch, dass die Längsstäbe erfindungsgemäß nur mehr vor dem ersten Schweißtakt der Schweißeinrichtung zugeführt werden und die Längsstäbe zwischen den einzelnen Schweißtakten frei bewegbar gelagert sind, und sie vor jedem Schweißtakt in Bezug auf den jeweiligen Querstab lagejustiert werden, ist es nicht mehr notwendig, die Längsstäbe während des gesamten Herstellungsvorganges für eine Bewehrungsmatte mittels geeigneter Führungseinrichtungen Lage zu fixieren.

Gemäß einem weiteren Ausführungsbeispiel der Erfindung ist vorgesehen, dass die Längsstäbe mittels der Positioniervorrichtung direkt der Transporteinrichtung entnommen und lagejustiert werden, wofür es sich als günstig herausgestellt hat, wenn die Positioniervorrichtung wenigstens ein vertikal bewegbares Führungselement für einen Längsstab aufweist.

Eine besonders einfache Lösung ergibt sich dabei, wenn die Querstäbe unten und die Längstäbe oben angeordnet werden. In diesem Fall kann gemäß einem weiteren Ausführungsbeispiel der Erfindung die Entnahme und Lagejustierung der Längsstäbe durch Absenken der Positioniervorrichtung von oben erfolgen. Bevorzugt sind die Längsstäbe zwischen den einzelnen Schweißtakten frei bewegbar gelagert.

Als wirtschaftlich sinnvoll hat es sich dabei herausgestellt, wenn das Verschweißen der Querstäbe mit den Längsstäben mittels einer Schweißeinrichtung erfolgt, die mehrere bewegbar angeordnete Schweißköpfe, deren gegenseitige Lage horizontal und/oder vertikal veränderbar ist, aufweist, wobei Bewehrungsmatten mit schräg zu den Querstäben verlaufenden Längstäben in einfacher Weise dann realisierbar sind, wenn der horizontale Abstand zwischen wenigstens zwei Schweißköpfen in Bezug auf die Längserstreckung des Querstabes bei zwei aufeinander folgenden Schweißtakten verändert wird.

Eine konstruktiv einfache und robuste Lösung wird weiters erreicht, wenn gemäß einem weiteren Ausführungsbeispiel des erfindungsgemäßen Verfahrens die Positioniervorrichtung mit der Schweißeinrichtung verbunden ist und mit dieser gemeinsam vertikal und/oder horizontal bewegt wird, wobei eine besonders flexible Anpassung an die verschiedensten Anforderungen dann in einfacher Weise ermoglicht wird, wenn an wenigstens einem Schweißkopf der Schweißeinrichtung ein Führungselement der Positioniervorrichtung angeordnet ist und das Führungselement mit dem Schweißkopf gemeinsam bewegt wird.

Obwohl es grundsätzlich denkbar wäre, die Längsstäbe direkt von einer Richtmaschine gerichtet der Schweißeinrichtung zuzuführen und diese erst nach dem Fertigstellen der Bewehrungsmatte abzulängen ist gemäß einem weiteren bevorzugten Ausführungsbeispiel der Erfindung vorgesehen, dass die Quer- und/oder Längsstäbe vor dem rasterförmigen Ausrichten auf eine vorbestimmte Länge geschnitten werden. Weiters soll eine Schweißeinrichtung zum Verbinden von mehreren zueinander rasterförmig ausgerichteten Quer und Längsstäben zu einer Bewehrungsmatte mit mehreren bewegbar angeordneten Schweißköpfen, deren gegenseitige Lage horizontal und/oder vertikal veränderbar ist, angegeben werden.

Bei den bisher bekannten Schweißeinrichtungen erfolgt das Positionieren der Längsstäbe in Bezug auf die Querstäbe entweder händisch oder mittels geeigneter Führungseinrichtungen, die gleichzeitig dem Transport der Längsstäbe dienen können.

Derartige Schweißeinrichtungen eignen sich besonders für Bewehrungsmatten mit einem regelmäßigen Raster und können sogar zur Herstellung von Bewehrungsmatten, bei denen die Längsstäbe in einem unregelmäßigen Raster, das heißt mit verschiedenen Abständen zueinander angeordnet sind, verwendet werden.

Die Erfindung hat es sich zur Aufgabe gemacht, eine Schweißeinrichtung der eingangs erwähnten Art anzugeben, mit der die Längsstäbe ohne Einschränkung an jeder beliebigen Stelle mit den Querstäben verschweißt werden können.

Dies wird erfindungsgemäß dadurch erreicht, dass an der Schweißeinrichtung eine Positioniervorrichtung angeordnet ist, die mehrere gegenüber den Querstäben horizontal und vertikal bewegbare Führungselemente aufweist und mit der Schweißeinrichtung gemeinsam bewegbar ist, wobei es sich als günstig erwiesen hat, wenn an wenigstens einem Schweißkopf der Schweißeinrichtung ein Führungselement der Positioniervorrichtung angeordnet ist.

Dadurch, dass die Positioniervorrichtung nunmehr gemeinsam mit der Schweißeinrichtung verfahrbar ist, kann auf gesonderte Führungseinrichtungen für die Längsstäbe verzichtet werden.

Dabei kann die Flexibilität hinsichtlich der herzustellenden Matten und der geforderten Raster wesentlich erhöht werden, wenn an jedem Schweißkopf der Schweißeinrichtung ein Führungselement der Positioniervorrichtung angeordnet ist. Eine konstruktiv einfache Lösung sieht dabei vor, dass das Führungselement v-förmig ausgebildet, was sich insbesondere dann als vorteilhaft herausgestellt hat, wenn die Positionierung der Längsstäbe an den Querstäben sowie das Verschweißen von oben erfolgt, das heißt, die Querstäbe sind in der hergestellten Bewehrungsmatte unten und die Längsstäbe oben angeordnet.

Ein weiteres Ausführungsbeispiel sieht vor, dass das Führungselement zangenförmig ausgebildet ist.

Die Erfindung betrifft weiters eine Anlage zur Herstellung einer gerasterten Bewehrungsmatte mit einer erfindungsgemäßen Schweißeinrichtung sowie die Verwendung einer derartigen Anlage im erfindungsgemäßen Verfahren.

Dadurch wird eine flexible Mattenschweißanlage erreicht, mit der beliebige bezüglich ihrer Ausmaße und Anordnung der Längs- und Querstäbe zueinander flexible Bewehrungsmatten hergestellt werden können, wofür es sich gemäß einer weiteren Ausführungsform der Erfindung als vorteilhaft herausgestellt hat, wenn die Anlage eine CAD/CAM basierte Steuereinrichtung zum Steuern der Positionier- und/oder Schweißeinrichtung aufweist.

Weitere Vorteile und Einzelheiten der Erfindung werden anhand der nachfolgenden Figurenbeschreibung unter Bezugnahme auf die in der Zeichnung dargestellten Ausführungsbeispiele näher erläutert. Darin zeigen:
- Fig. 1 bis 3: Draufsichten auf unterschiedliche Ausführungsbeispiele erfindungsgemäßer Bewehrungsmatten,
- Fig. 4 bis 6: in Seitenansicht die Verfahrensschritte zur Herstellung einer Bewehrungsmatte.
- Fig, 4a, 4b, 5a und 6a: Vorderansichten der Verfahrensschritte zur Herstellung einer Bewehrungsmatte,
- Fig. 7: einen Querstab mit angeschweißten Längsstäben und
- Fig. 8: den Querstab aus Fig. 7 in gebogenem Zustand.

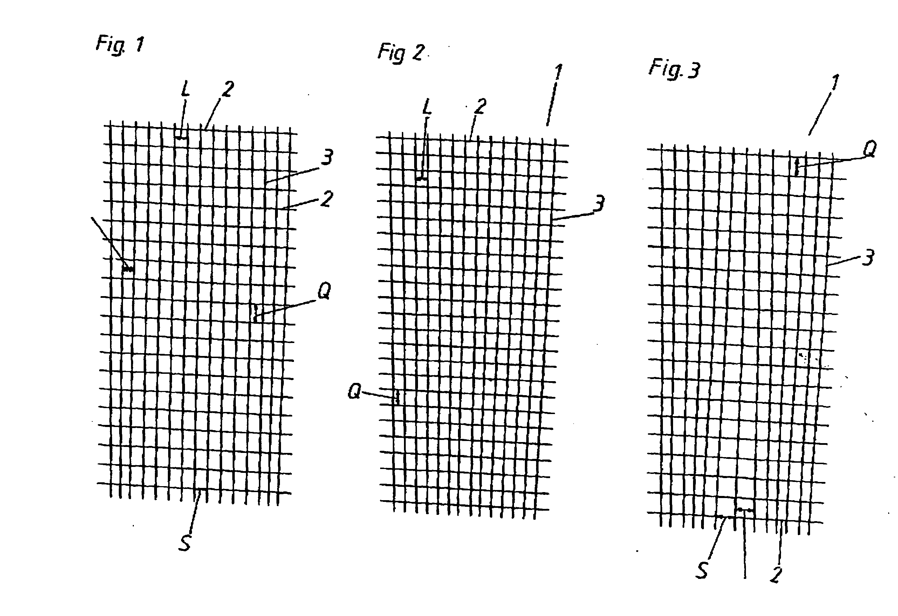

Die Fig. 1 bis 3 zeigen Draufsichten auf Bewehrungsmatten 1, wobei die Abstände Q zwischen den Querstäben 2 regelmäßig sind und die einzelnen Querstäbe 2 parallel nacheinander angeordnet sind. Die Längsstäbe 3 sind auf den Querstäben 2 angeordnet, wobei jeweils einige Längsstäbe 3 schräg zu den Querstäben 2 verlaufend mit diesen verbunden sind. Der Abstand L zwischen den einzelnen Längsstäben 3 variiert teilweise stark. Somit ergibt sich ein unregelmäßiges Raster mit verschieden großen Flächen zwischen den Quer- und Längsstäben. Der Abstand zwischen den Kreuzungspunkten entlang der Querstäbe 2 ist mit S bezeichnet.

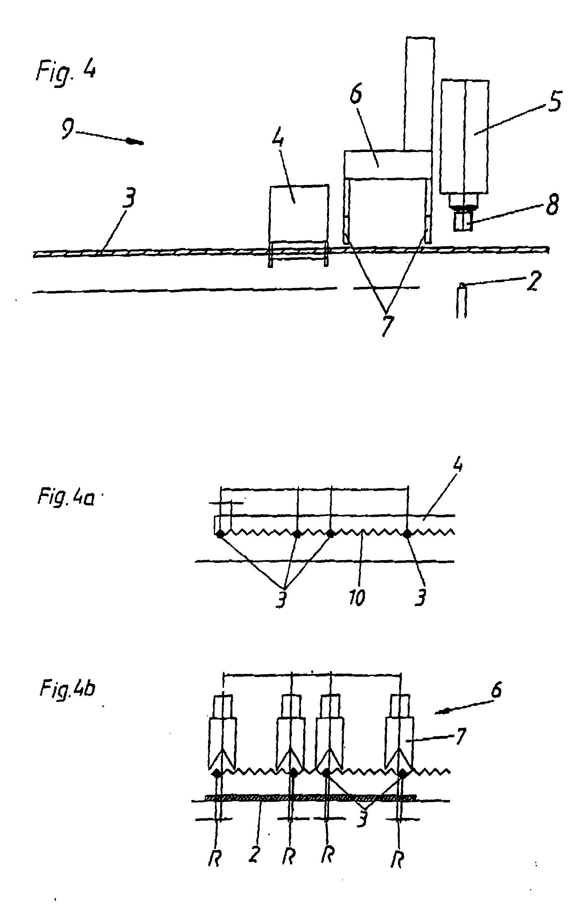

Fig. 4 korrespondiert mit den Fig. 4a und 4b, wobei Fig. 4 eine Seitenansicht einer Anlage 9 zur Herstellung einer gerasterten Bewehrungsmatte 1 und die Fig. 4a und 4b eine ausschnittsweise Vorderansicht einer solchen Anlage 9 zeigt. In diesen Figuren sind Vorbereitungsschritte bis zum ersten Schweißtakt bei der Herstellung einer Bewehrungsmatte 1 dargestellt. In Fig. 4 ist hierbei die Transportvorrichtung 4 schematisch gezeigt, welche die Längsstäbe 3 transportiert. Dabei kann die Transportvorrichtung 4 einen magnetischen Bereich aufweisen, an dessen Unterseite in einem regelmäßigen Raster in den Rasterschlitzen 10 die benötigten Längsstabe 3 gehalten bzw. transportiert werden (siehe Fig. 4a). Anschließend verfahren die Führungselemente 7 der Positioniervorrichtung 6 entsprechend der gewünschten Positionierung der Längsstäbe 3 oberhalb der Querstäbe 2 (siehe Fig. 4b). Diese Führungselemente 7 sind dabei v-förmig ausgebildet, wobei die Öffnungsweite wenigstens der Breite von zwei Rasterschützen 10 der Transportvorrichtung 4 entspricht. Der Abstand zwischen den Rasterschlitzen 10 liegt bei einer konkreten Ausführung bei 25 mm. Da jedoch die gewünschten Abstände zwischen den Längsstäben 3 unterschiedlichste Werte aufweisen können, wird durch die Führungselemente 7 eine Lageveränderung um den Abstand R durchgeführt.

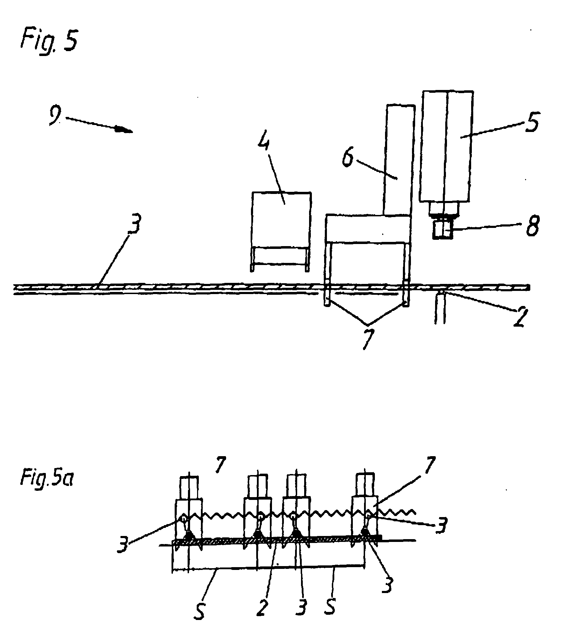

In Fig. 5 bzw. 5a löst die Positioniervorrichtung 6 die Längsstäbe 3 von der Transporteinrichtung 4 und bewegt diese in Richtung der Querstäbe 2. Dabei werden, wie aus Fig. 5a ersichtlich, die Längsstäbe 3 gemäß der verfahrbaren Position der Führungselemente 7 in der V-Form zentriert, sodass die gewünschten horizontalen Abstände S zwischen den Längsstäben 3 entlang der Querstäbe 2 erreicht wird. Dieser Abstand S entspricht dem gewünschten Abstand zwischen den Längsstäben 3 über einem Querstab 2. Die Position bzw. Lage der Längsstäbe 3 verändert sich hierbei gegenüber den in den regelmäßigen Rasterschlitzen 10 eingenommenen Positionen um den Abstand R.

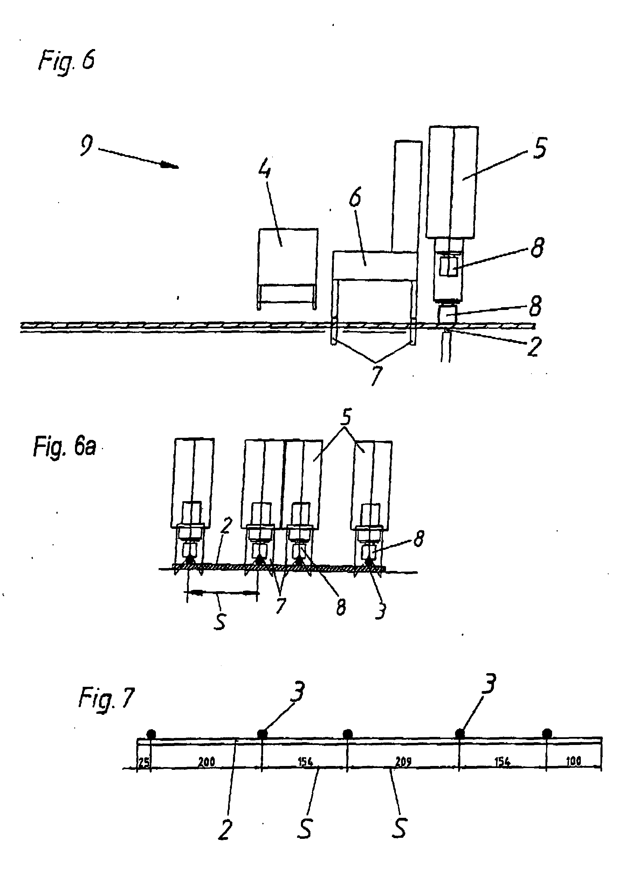

Fig. 6 bzw. 6a zeigt den ersten Schweißtakt, bei dem die Schweißköpfe 8 der Schweißvorrichtung 5 am Kreuzungspunkt der Quer- und Längsstäbe 2, 3 diese miteinander verschweißen. In Fig. 6 sind hierbei die Führungselemente 7 und die Schweißköpfe 8 schematisch dargestellt, wobei bevorzugt das Führungselement 7 am Schweißkopf 8 angeordnet ist, um eine möglichst exakte Positionierung und somit Bestimmung des Abstandes S zu erreichen.

Die genannten Fig. 4 bis 6 beschreiben das erfindungsgemäße Verfahren bis zum den ersten Schweißtakt, bis zu dem auch die Transportvorrichtung 4 im Einsatz ist. Beim zweiten und den nachfolgenden Schweißtakten sind nur mehr die Schritte, die in den Fig. 5 und 5a bzw. Fig. 6 und 6a dargestellt sind, notwendig. Je nach gewünschtem Abstand S zwischen den Schweißpunkten justieren dabei die Führungselemente 7 der Positioniervorrichtung 6 die Längsstäbe 3 entlang der Querstäbe 2, wobei die Schweißköpfe 8 der Schweißvorrichtung 5 das Verschweißen gleichzeitig oder nacheinander durchführen können.

Eine Grundidee der Erfindung besteht also darin, die Längsstäbe nach dem ersten Schweißtakt nicht mehr dauernd mittels einer geeigneten Führungseinrichtung zu fixieren, sondern diese vor jedem Schweißtakt in ihrer Lage zu justieren.

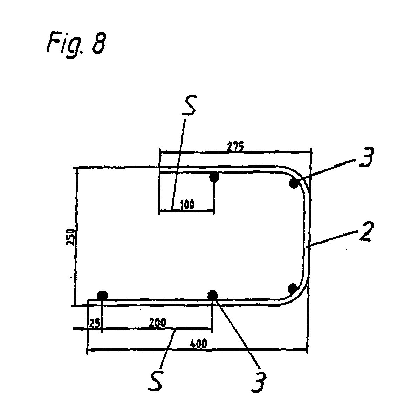

Die Fig. 7 und 8 zeigen einen Querschnitt einer Bewehrungsmatte 1 mit den konkret angegebenen Abständen S zwischen den Längsstäben 3. Fig. 8 zeigt dabei den Ausschnitt der Bewehrungsmatte 1 in gebogenem Zustand. Die Abstände S werden schon bei der Herstellung der Bewehrungsmatte 1 (siehe Fig. 7) entsprechend der später gewünschten Biegung vorgesehen. Somit sind die Längsstäbe 3 für die gewünschte Endposition der Bewehrungsmatte 1 optimiert, sodass durch relativ geringen Materialeinsatz hohe statische Stabilität in einem später mit Beton ausgegossenem Korb erreicht wird.

## Patentansprüche

1. Verfahren zur maschinellen Herstellung einer Bewehrungsmatte bei dem mehrere im Wesentlichen parallele, voneinander beabstandete Querstäbe mit mehreren voneinander beabstandeten Längsstäben rasterförmig ausgerichtet und miteinander verschweißt werden, wobei in einem Schweißtakt mehrere, insbesondere alle, Längsstäbe mit dem selben Querstab verschweißt werden, **dadurch gekennzeichnet, dass** die Längsstäbe (3) vor jedem Schweißtakt in Bezug auf den jeweiligen Querstab (2) lagejustiert werden.

2. Verfahren nach Anspruch 1, **dadurch gekennzeichnet, dass** die Längsstäbe (3) in Bezug auf die Querstäbe (2) mit unterschiedlichen Abständen (L) zueinander lagejustiert werden.

3. Verfahren nach Anspruch 1 oder 2, **dadurch gekennzeichnet, dass** die Längsstäbe (3) vor dem ersten Schweißtakt mittels einer Transporteinrichtung (4) einer Schweißeinrichtung (5) zugeführt werden, bevor sie mittels einer Positioniervorrichtung (6) in Bezug auf den ersten Querstab (2), mit dem sie verschweißt werden, lagejustiert und verschweißt werden.

4. Verfahren nach einem der Ansprüche 1 bis 3, **dadurch gekennzeichnet, dass** die Längsstäbe (3) mittels der Positioniervorrichtung (6) direkt der Transporteinrichtung (4) entnommen und lagejustiert werden.

5. Verfahren nach einem der Ansprüche 1 bis 4, **dadurch gekennzeichnet, dass** das Verschweißen der Querstäbe (2) mit den Längsstäben (3) mittels einer Schweißeinrichtung (5) erfolgt, die mehrere bewegbar angeordnete Schweißköpfe (8), deren gegenseitige Lage horizontal und/oder vertikal veränderbar ist, aufweist.

6. Verfahren nach Anspruch 5, **dadurch gekennzeichnet, dass** der horizontale Abstand zwischen wenigstens zwei Schweißköpfen (8) in Bezug auf die Längserstreckung des Querstabes (2) bei zwei aufeinander folgenden Schweißtakten verändert wird.

7. Verfahren nach Anspruch 5 oder 6, **dadurch gekennzeichnet, dass** die Positioniervorrichtung (6) mit der Schweißeinrichtung (5) verbunden ist und mit dieser gemeinsam vertikal und/oder horizontal bewegt wird.

8. Verfahren nach Anspruch 7, **dadurch gekennzeichnet, dass** an wenigstens einem Schweißkopf (8) der Schweißeinrichtung (5) ein Führungselement (7) der Positioniervorrichtung (6) angeordnet ist und das Führungselement (7) mit dem Schweißkopf (8) gemeinsam bewegt wird.

9. Schweißeinrichtung zum Verbinden von mehreren zueinander rasterförmig ausgerichteten Quer- und Längsstäben zu einer Bewehrungsmatte, mit mehreren bewegbar angeordneten Schweißköpfen, deren gegenseitige Lage horizontal und/oder vertikal veränderbar ist, **dadurch gekennzeichnet, dass** an der Schweißeinrichtung (5) eine Positioniervorrichtung (6) angeordnet ist, die mehrere gegenüber den Querstäben (2) horizontal und vertikal bewegbare Führungselemente (7) aufweist und mit der Schweißeinrichtung (5) gemeinsam bewegbar ist.

10. Schweißeinrichtung nach Anspruch 9, **dadurch gekennzeichnet, dass** an wenigstens einem Schweißkopf (8) der Schweißeinrichtung (5) ein Führungselement (7) der Positioniervorrichtung (6) angeordnet ist.

11. Schweißeinrichtung nach Anspruch 10, **dadurch gekennzeichnet, dass** an jedem Schweißkopf (8) der Schweißeinrichtung (5) ein Führungselement (7) der Positioniervorrichtung (6) angeordnet ist.

12. Anlage (9) zur Herstellung einer gerasterten Bewehrungsmatte (1) mit einer Schweißeinrichtung (5) nach einem der Ansprüche 9 bis 11.

13. Verwendung einer Anlage (9) nach Anspruch 12 in einem Verfahren nach einem der Ansprüche 1 bis 8.

## Claims

1. A process for the mechanical production of a reinforcing mat in which a plurality of substantially parallel mutually spaced transverse bars are oriented in a grid configuration with a plurality of mutually spaced longitudinal bars and welded together, wherein a plurality of, and in particular all, longitudinal bars are welded to the same transverse bar in a welding cycle, **characterised in that** prior to each welding cycle the longitudinal bars (3) are adjusted in position in relation to the respective transverse bar (2).

2. A process according to claim 1 **characterised in that** the longitudinal bars (3) are adjusted in position in relation to the transverse bars (2) at different spacings (L) relative to each other.

3. A process according to claim 1 or claim 2 **characterised in that** prior to the first welding cycle the longitudinal bars (3) are fed by means of a transport device (4) to a welding device (5) before they are adjusted in position by means of a positioning device (6) in relation to the first transverse bar (2) to which they are welded.

4. A process according to one of claims 1 to 3 **characterised in that** the longitudinal bars (3) are taken directly from the transport device (4) by means of the positioning device (6) and adjusted in position.

5. A process according to one of claims 1 to 4 **characterised in that** welding of the transverse bars (2) to the longitudinal bars (3) is effected by means of a welding device (5) which has a plurality of movably arranged welding heads (8), the mutual position of which is variable horizontally and/or vertically.

6. A process according to claim 5 **characterised in that** the horizontal distance between at least two welding heads (8) is altered in relation to the longitudinal extent of the transverse bar (2) in two successive welding cycles.

7. A process according to claim 5 or claim 6 **characterised in that** the positioning device (6) is connected to the welding device (5) and is moved jointly therewith vertically and/or horizontally.

8. A process according to claim 7 **characterised in that** a guide element (7) of the positioning device (6) is arranged at at least one welding head (8) of the welding device (5) and the guide element (7) is moved jointly with the welding head (8).

9. A welding device for connecting a plurality of transverse and longitudinal bars which are oriented in grid-like relationship with each other to provide a reinforcing mat, having a plurality of movably arranged welding heads, the mutual position of which is variable horizontally and/or vertically, **characterised in that** arranged on the welding device (5) is a positioning device (6) which has a plurality of guide elements (7) movable horizontally and vertically with respect to the transverse bars (2) and is movable jointly with the welding device (5).

10. A welding device according to claim 9 **characterised in that** a guide element (7) of the positioning device (6) is arranged on at least one welding head (8) of the welding device (5).

11. A welding device according to claim 10 **characterised in that** a guide element (7) of the positioning device (6) is arranged on each welding head (8) of the welding device (5).

12. An installation (9) for the production of a grid-like reinforcing mat (1) with a welding device (5) according to one of claims 9 to 11.

13. Use of an installation (9) according to claim 12 in a process according to one of claims 1 to 8.

## Revendications

1. Procédé de fabrication mécanique d'un treillis d'armature, pour lequel plusieurs barres transversales sensiblement parallèles, espacées les unes des autres avec plusieurs barres longitudinales espacées les unes des autres sont orientées en forme de trame et soudées les unes aux autres, plusieurs, en particulier toutes les barres longitudinales étant soudées dans un cycle de soudage à la même barre transversale, **caractérisé en ce que** les barres longitudinales (3) sont ajustées en position par rapport à la barre transversale respective (2) avant chaque cycle de soudage.

2. Procédé selon la revendication 1, **caractérisé en ce que** les barres longitudinales (3) sont ajustées en position par rapport aux barres transversales (2) à différentes distances (L) les unes des autres.

3. Procédé selon la revendication 1 ou 2, **caractérisé en ce que** les barres longitudinales (3) sont amenées avant le premier cycle de soudage au moyen d'un dispositif de transport (4) à un dispositif de soudage (5) avant qu'elles ne soient ajustées en position et soudées au moyen d'un dispositif de positionnement (6) par rapport à la première barre transversale (2), à laquelle elles sont soudées.

4. Procédé selon l'une quelconque des revendications 1 à 3, **caractérisé en ce que** les barres longitudinales (3) sont prélevées directement du dispositif de transport (4) et ajustées en position au moyen du dispositif de positionnement (6).

5. Procédé selon l'une quelconque des revendications 1 à 4, **caractérisé en ce que** les barres transversales (2) sont soudées aux barres longitudinales (3) au moyen d'un dispositif de soudage (5) qui présente plusieurs têtes de soudage (8) disposées de manière mobile, dont la position réciproque peut être modifiée horizontalement et/ou verticalement.

6. Procédé selon la revendication 5, **caractérisé en ce que** la distance horizontale entre au moins deux têtes de soudage (8) est modifiée par rapport à l'étendue longitudinale de la barre transversale (2) lors de deux cycles de soudage consécutifs.

7. Procédé selon la revendication 5 ou 6, **caractérisé en ce que** le dispositif de positionnement (6) est relié au dispositif de soudage (5) et est déplacé verticalement et/ou horizontalement avec celui-ci.

8. Procédé selon la revendication 7, **caractérisé en ce qu'**un élément de guidage (7) du dispositif de positionnement (6) est disposé sur au moins une tête de soudage (8) du dispositif de soudage (5) et **en ce que** l'élément de guidage (7) est déplacé avec la tête de soudage (8).

9. Dispositif de soudage pour la liaison de plusieurs barres transversales et longitudinales orientées en forme de trame les unes par rapport aux autres pour former un treillis d'armature, avec plusieurs têtes de soudage disposées de manière mobile, dont la position réciproque peut être modifiée horizontalement et/ou verticalement, **caractérisé en ce qu'**un dispositif de positionnement (6) est disposé sur le dispositif de soudage (5), lequel présente plusieurs éléments de guidage (7) mobiles horizontalement et verticalement par rapport aux barres transversales (2) et peut être déplacé avec le dispositif de soudage (5).

10. Dispositif de soudage selon la revendication 9, **caractérisé en ce qu'**un élément de guidage (7) du dispositif de positionnement (6) est disposé sur au moins une tête de soudage (8) du dispositif de soudage (5).

11. Dispositif de soudage selon la revendication 10, **caractérisé en ce qu'**un élément de guidage (7) du dispositif de positionnement (6) est disposé sur chaque tête de soudage (8) du dispositif de soudage (5).

12. Installation (9) destinée à la fabrication d'un treillis d'armature (1) tramé avec un dispositif de soudage (5) selon l'une quelconque des revendications 9 à 11.

13. Utilisation d'une installation (9) selon la revendication 12 dans un procédé selon l'une quelconque des revendications 1 à 8.
